# EUROPEAN PATENT SPECIFICATION

(11) **EP 3 688 360 B1**
(45) Date of publication and mention of the grant of the patent: **16.06.2021**
(21) Application number: 18705897.9
(22) Date of filing: 15.02.2018
(51) Int. Cl.: F16L 33/30, F16L 55/24

(54) **HOSE CONNECTOR WITH VISIBLE, REMOVABLE FILTER FOR WATER TOOLS**
SCHLAUCHVERBINDUNG MIT SICHTBAREM, ENTFERNBAREM FILTER FÜR BEWÄSSERUNGSVORRICHTUNGEN
RACCORD POUR TUYAUX SOUPLES AVEC FILTRE VISIBLE ET AMOVIBLE POUR DISPOSITIFS D'IRRIGATION

(30) Priority: 27.09.2017 DE 102017009041
(43) Date of publication of application: 05.08.2020
(73) Proprietor: Husqvarna AB, 561 82 Huskvarna (SE)
(72) Inventor: MÜLLER-BRAUN, Matthias, 89233 Neu-Ulm (DE); FREY, Reiner, 89231 Neu-Ulm (DE); SCHLEGEL, Tobias, 89171 Illerkirchberg (DE)
(74) Representative: Finkele, Rolf
(86) International application number: PCT/EP2018/053780
(87) International publication number: WO 2019/063134

(56) References cited:
- EP-A1- 2 995 712
- US-A- 3 729 142
- US-A1- 2011 114 195

## Description

### TECHNICAL FIELD

The present disclosure relates to filters for water tools. More specifically, the present disclosure relates to a visible and removable filter for water tools.

### BACKGROUND

Watering tools generally include a filter to check any undesired particles such as impurities and the like present in water. But due to its role to check the impurities, the filter needs to be cleaned regularly as per use for a longer lifetime. However, conventional watering tools prove cumbersome for a common user for engaging with the filter due to multiple reasons.

The reasons which make using the conventional watering tools, and filters used therewith, difficult range from low access to recognizability of the filters. This invariably leads to indifferent use of the filter with less emphasis and attention to proper cleaning of the filter. Moreover, at times the filter maybe located substantially inside the watering tools thereby requiring application of some tools to remove them, if possible.

An example of a connector system is provided by WO2010/127815 (hereinafter referred to as '815 reference). The '815 reference provides a connector piece for a click-on connector system used in watering. The connector piece includes a connector nipple. Further, a sealing element is arranged in the connector piece which automatically blocks the flow path through the connector piece if no connector sleeve is clicked on. However, when a connector sleeve is clicked onto the connector nipple, there is a lift-off of the sealing element in the interior of the connector piece off the sealing surface and therefore release of the flow path.

Another example is provided by EP2995712A1 which discloses an integration apparatus for a water valve for a washing machine. The integration apparatus includes a depressurizing valve unit and a filter unit which is disposed in front of the depressurizing valve unit towards the direction of incoming feed water. The depressurizing valve unit and the filter unit are separate parts that are coupled with each other by means of a coupling unit. However, the coupling unit includes locking elements or steps and locking protrusions that snap fit into the locking elements.

Yet another example is provided by US2011/0114195 which discloses a union coupling with a removable screen. The union coupling includes a pipe joint, a fitting that receives the screen, and a collar which clamps the fitting to the pipe joint. However, the fitting has an inner surface that defines a passage through the fitting and a pocket formed in the inner surface. The screen has a transverse extension that is received in the pocket with engagement of the transverse extension and the pocket restricting passage of the screen past a predetermined position in the passage.

US3729142A discloses drippers for irrigation. A dripper is formed by a male section and a female section. The male section has in its lower part a filter ring which functions as a filter. Holes are located on the sides of the body of the female section. The male section is connected with the body of the female section by ears, which penetrate in the holes located on the sides of the body of the female section.

The filter, as used conventionally, also needs to be provided with a means for cleaning when not in use. Further, these improvements are expected to be provided without increasing the number of parts or components of the water tool, especially the filter. Thus, an improved filter for water tools is required.

### SUMMARY

In view of the above, it is an objective of the present invention to solve or at least reduce the drawbacks discussed above. The invention consists in a hose connector, and is set out in the appended claims. The hose connector includes a connector port adapted to receive water at an inlet. The hose connector includes an outlet to allow water to leave the connector port. The hose connector includes a filter coupled to the connector port at the inlet. The filter is adapted to be inserted inside the inlet. The hose connector includes at least one recess. The filter has a first end and a second end. Further, the filter includes a flange portion at the first end, such that the flange portion has at least one protrusion adapted to engage the at least one recess. Thus, the present disclosure provides a simple, compact and convenient filter which can be removably engaged with a typical hose connector.

According to an embodiment of the present invention, the hose connector is a water nipple. Further, the filter is compatible with different types of the water nipples increasing versatility of application of the filter.

According to an embodiment of the present invention, the filter is configured to be inserted with a cleaning needle at the second end. The cleaning needle may be used to clean nozzles etc. of watering tools.

According to an embodiment of the present invention, the filter is configured to be removably engaged with the at least one recess. As elaborated earlier, any maintenance or even cleaning operation of the filter would preferably require the filter to be removable as per need.

According to an embodiment of the present invention, the filter is readily removable with human intervention. This obviates need of any complex tool or equipment to remove the filter thereby making it convenient for a common user.

According to an embodiment of the present invention, the filter is made as a single unit. By manufacturing the filter as a single unit, the filter may provide benefits such as lower maintenance costs, and ease of replacement, if required.

According to an embodiment of the present invention, the filter is made of a plastic material. Preference for the plastic material takes into account lifetime and implementation needs of the filter. Also, as the filter is in contact with water, plastics typically provide advantages over metal materials.

According to the present invention, the filter has a plurality of holes towards the second end. The plurality of holes is provided to serve as water outlet and filter out any impurities (in the water) around the second end.

According to an embodiment of the present invention, the filter is visibly distinguishable from the connector port. This make it easy for the common user to identify and engage with the filter, whenever required.

Other features and aspects of this invention will be apparent from the following description and the accompanying drawings

### BRIEF DESCRIPTION OF THE DRAWINGS

The invention will be described in more detail with reference to the enclosed drawings, wherein:
**FIG. 1** shows a perspective view of a hose connector along with a filter, in accordance with an embodiment of the present invention;
**FIG. 2** shows a perspective view of a hose connector without the filter, in accordance with an embodiment of the present invention;
**FIG. 3** shows a perspective view of the filter, in accordance with an embodiment of the present invention;
**FIG. 4** shows a side view of the filter, in accordance with an embodiment of the present invention;
**FIG. 5** shows a front view of the filter along with the plurality of holes, in accordance with an embodiment of the present invention;
**FIG. 6** shows a front cross-sectional view of the filter along with the plurality of holes, in accordance with an embodiment of the present invention;
**FIG. 7** shows a side cross-sectional view of the filter engaged with the hose connector, in accordance with an embodiment of the present invention;
**FIG. 8** shows a side view of the filter along with a cleaning needle, in accordance with an embodiment of the present invention; and
**FIG. 9** shows a perspective view of the filter along with the cleaning needle, in accordance with an embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

In the drawings and specification, there have been disclosed preferred embodiments and examples of the invention and, although specific terms are employed, they are used in a generic and descriptive sense only and not for the purpose of limitation of the scope of the invention being set forth in the following claims.

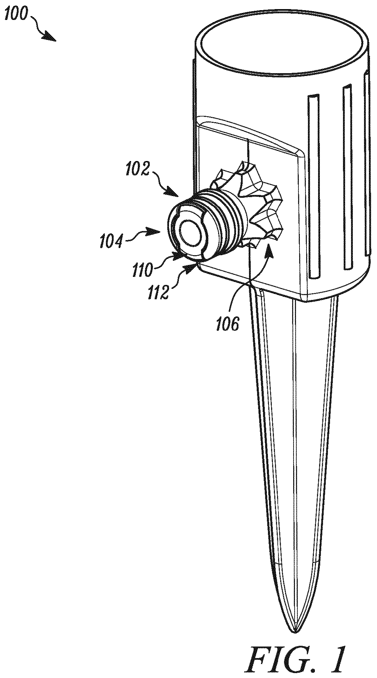

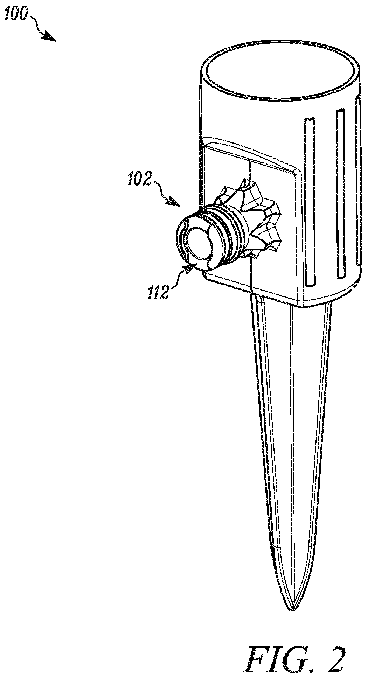

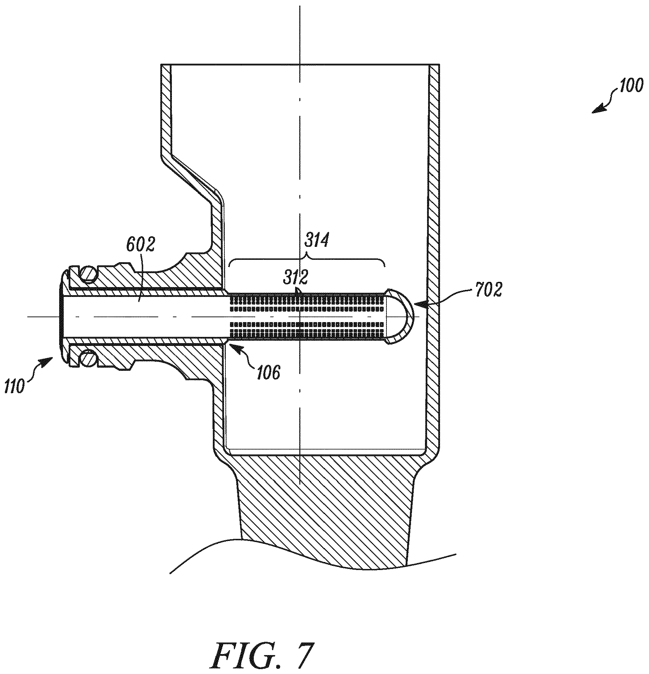

**FIG. 1** illustrates a hose connector **100.** The hose connector **100** includes a connector port **102** adapted to receive water at an inlet **104.** The hose connector **100** includes an outlet **106** (shown in **FIG. 7**) to allow water to leave the connector port **102.** The hose connector **100** includes a filter **110** coupled to the connector port **102** at the inlet **104.** The filter **110** is adapted to be inserted inside the inlet **104.** The connector port 102 includes at least one recess **112** (shown in **FIG. 2**). The connector port 102 of the present disclosure includes two recesses **112.** The filter **110** may normally be covering the recesses **112** in order to provide a desired waterproof connection for engaging a hose (not shown) with the hose connector **100,** particularly with the filter **110.** Further, the size, position, and arrangement of the recess **112** may be primarily dependent upon the filter **110** among other factors. This will allow a secure connection between the recess **112** and the filter **110** and thereby lead to the watertight connection. In a preferred embodiment, the hose connector **100** is a water nipple or any similar water tool as known or used in the relevant art.

**FIG. 2** illustrates the hose connector **100** without the filter **110.** It should be contemplated that the filter **110** is not shown to illustrate the geometry of the hose connector **100** in a better manner. As shown, the connector port 102 includes two recesses **112,** however more recesses have been contemplated. The recesses **112** are accessible from outside the hose connector **100.** This configuration may be due to removal of the filter **110,** maybe for cleaning or like purposes. Either the filter **110** or the recess **112** may need to be cleaned as expected in case of longer operations. It shall be understood that the hose connector **100** may readily be utilized even without the application of the filter **110,** in case desired by a user. The filter **110** is visibly distinguishable from the connector port **102.** This is preferred in order to make it stand out from the connector port **102** or the at recess **112.** The filter **110** may be provided with different colors or patterns or textures or any other means known in the art for making it easily distinguishable from the connector port **102** or any part thereof.

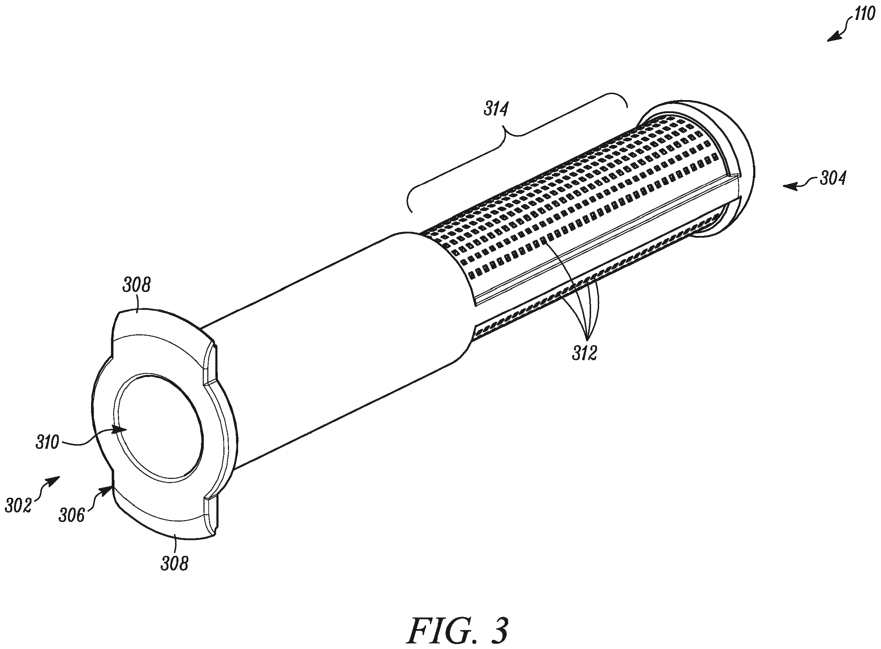

The filter **110,** preferably the flange portion **306** (shown in **FIG. 3**), is visibly distinguishable from the connector port **102.** Compared to conventional watering tools which are devoid of such visible features, the filter **110** of the present disclosure allows regular and timely maintenance of the filter **110,** particularly due to the ease of removal along with visibly distinguishable nature of the filter **110.** Thus, the visibly distinguishable filter **110** serves as an indicator for the user to attend to the filter **110** or any other part of the hose connector **100.**

**FIG. 3** illustrates the filter **110.** The filter **110** has a first end **302** and a second end **304.** Further, the filter **110** includes a flange portion **306** towards the first end **302.** The flange portion **306** has at least one protrusion **308** adapted to engage the recess **112.** The protrusions **308** are placed at diametrically opposite ends for ease of insertion or removal of the filter **110** into the recess **112.** The flange portion **306** allows the user to engage with the filter **110** engaged with the hose connector **100** in case of any need for removal of the filter **110.** The filter **110** has a central opening **310** to engage with the hose, when the filter **110** is engaged with the recess **112.**

The filter **110** is configured to be removably engaged with the recess **112.** Thus, the user may readily gain access to the filter **110** as would be required for regular cleaning purposes. Moreover, the filter **110** is readily removable just with human intervention, even without a need of any tool or equipment. This feature is readily possible as the filter **110** may be manufactured as a single unit which provides handling and operational benefits. The single unit also reduces the disadvantages of large number of parts and maintenance required. Additionally, or alternatively, the filter **110** may be made as a modular unit, preferably the flange **306** or other components of the filter 110 may be readily detachable and later-on refitted as per requirement. This further allows replacement or servicing of any part(s) of the filter **110** such as the flange 306 which may be susceptible to wear and tear during working life of the filter **110.**

The filter **110** has a plurality of holes **312** (or simply, holes **312**) towards the second end **304.** A filtering zone **314** is defined by the holes **312.** The number or type or arrangement of the holes **312** may be dependent upon the type of application of the filter **110,** or even quality of water involved with the application.

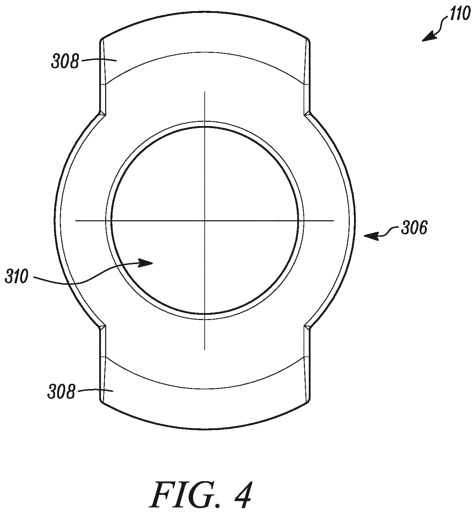

**FIG. 4** illustrates the filter **110** with the central opening **310.** The central opening **310** of the filter **110** may be designed taking into account common types of the hoses, as used or known in the art, for a secure, tight connection between the central opening **310** and the hose. In an embodiment, the filter **110** is made of a plastic material. The material may also be silicon, rubber or any material as would be applicable with implementation of the present disclosure.

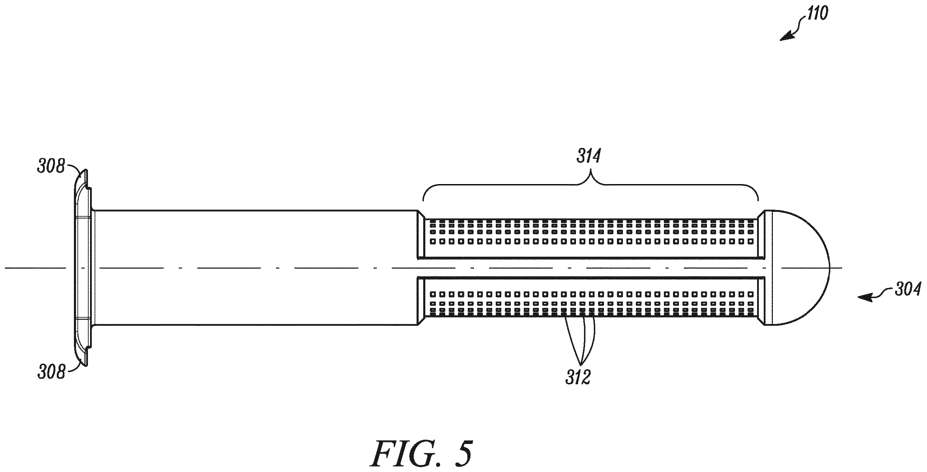

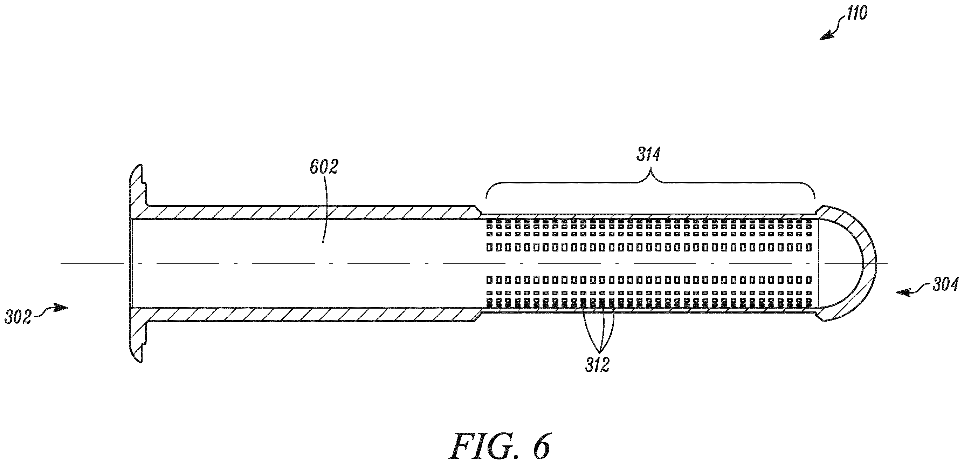

**FIGS. 5** and **6** illustrate the filter **110** along with the holes **312.** The specifications such as length, breadth, height, and radius of the filter **110** may be dependent upon the hose connector **100.** Particularly, **FIG. 6** shows the internal arrangement of the filter **110** showing a passage **602** for movement of the water from the first end **302** to the second end **304** of the filter **110.** The second end **304** is generally plugged or water-tight to check any leakage from the second end **304.** Further, the second end **304** allows the water to move towards the holes **312** for desired filtering of any unwanted particles (i.e. impurities) from the water by the filter **110.**

**FIG. 7** illustrates the filter **110** engaged with the hose connector **100.** As shown, the filter **110** engages fully with the one recess **112** till an end point **702** of the hose connector **100.** Preferably, the filtering zone **314** is not shielded by the port 102 of the hose connector **100.** This ensures filtering of the water by each of the holes **312** of the filtering zone **314** for desired working of the filter **110.** Alternatively, depending upon the application or type of the filter **110,** some, many or all of the holes **312** of the filtering zone **314** may be shielded by the hose connector **100.**

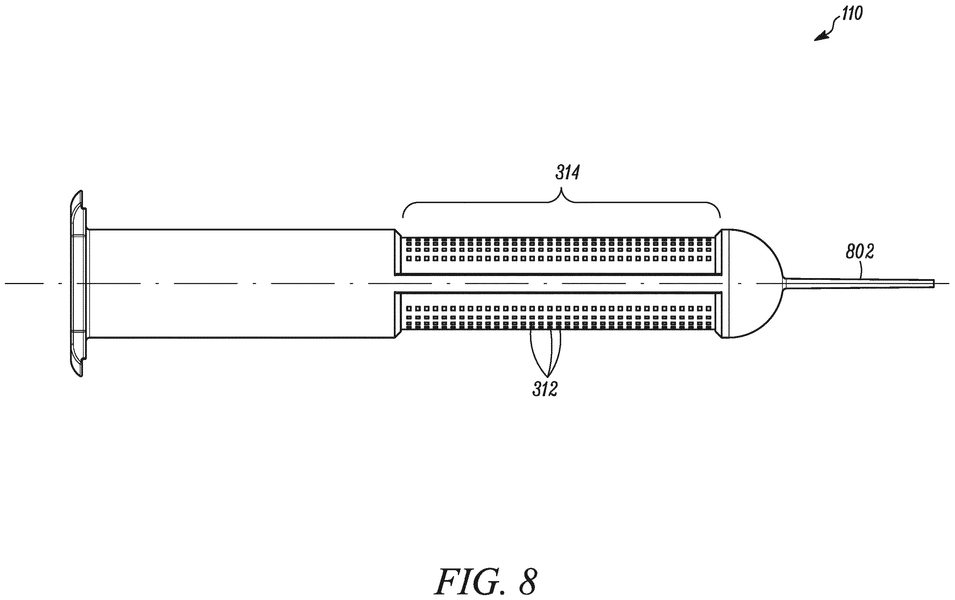

**FIG. 8** illustrates the filter **110** along with a cleaning needle **802.** The filter **110** is configured to be inserted with the cleaning needle **802** at the second end **304.** The cleaning needle **802** may be required to remove any unwanted material from the hose connector **100** or any other parts such as nozzles which are generally susceptible to foreign impurities during working life of the hose connector **100** or the filter **110.** Preferably, the cleaning needle **802** remains connected around the second end **304** of the filter **110,** but alternatively, the cleaning needle 802 may be removably attached with the filter **110.**

The filter **110** with the cleaning needle **802** around the second end **304** prevents loss of the cleaning needle as compared to conventional watering tools. Further, in order to use the cleaning needle **802,** the filter **110** is removed from the recess **112** of the hose connector **100.** This makes the filter **110** free of any water and thereby ready for any cleaning action. Then, the filter **110** along with the cleaning needle **802** may be used for cleaning any part (say nozzles) of the hose connector **100.**

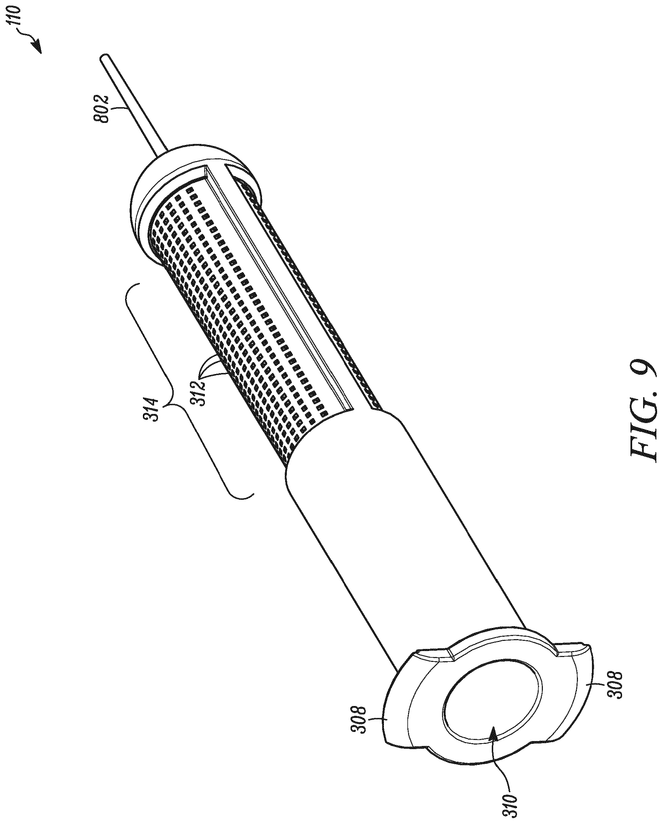

**FIG. 9** illustrates another view of the filter **110** with respect to the cleaning needle **802.** The cleaning needle **802** is applicable for non-use cases of the filter **110.** Once the filter **110** is disengaged from the hose connector **100,** the cleaning needle **802** may be used to clean the filter **110,** particularly around the filtering zone **314** or the second end **304.** The present disclosure may be readily implemented even without the application of the cleaning needle **802.**

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- 100: Hose Connector
- 102: Connector Port
- 104: Inlet
- 106: Outlet
- 110: Filter
- 112: Recess
- 302: First End
- 304: Second End
- 306: Flange Portion
- 308: Protrusion
- 310: Central Opening
- 312: Holes
- 314: Filtering Zone
- 602: Passage
- 702: End Point
- 802: Cleaning Needle

## Claims

1. A hose connector (**100**) comprising:
a connector port (**102**) formed as a tubular body, adapted to receive water at an inlet (**104**) and to deliver water at an outlet (106), wherein the inlet (106) comprises a front surface substantially perpendicular to the longitudinal axis of the tubular body; and
a filter (**110**) coupled to the connector port (**102**) at the inlet (**104**), the filter (110) having a first end (302) and a second end (304); wherein the filter (**110**) includes a flange portion (306) at the first end (302) and a plurality of holes (312) towards the second end (304) defining a filtering zone (314);
**characterized in that:**
the filter (**110**) is adapted to be inserted inside the connector port through the inlet (**104**) until the flange portion (306) abuts against the front surface of the inlet (104);
the connector port (102) includes at least one recess (112) comprised in said front surface of the inlet (104); and
the flange portion has at least one protrusion (308) adapted to engage the at least one recess (112).

2. The hose connector (**100**) of claim 1, wherein the hose connector (**100**) is a water nipple.

3. The hose connector (**100**) of claim **1,** wherein the filter (**110**) is configured to be inserted with a cleaning needle (**802**) at the second end (**304**).

4. The hose connector (**100**) of claim **1,** wherein the filter (**110**) is configured to be removably engaged with the at least one recess (**112**).

5. The hose connector (**100**) of claim **1,** wherein the filter (**110**) is readily removable with human intervention.

6. The hose connector (**100**) of claim **1,** wherein the filter (**110**) is made as a single unit.

7. The hose connector (**100**) of claim **1,** wherein the filter (**110**) is made of a plastic material.

8. The hose connector (**100**) of claim **1,** wherein the filter (**110**) is visibly distinguishable from the connector port (**102**).

## Patentansprüche

1. Schlauchverbinder (100), umfassend:
einen Verbinderanschluss (102), der als röhrenförmiger Körper ausgebildet und angepasst ist, um Wasser an einem Einlass (104) aufzunehmen und Wasser an einem Auslass (106) abzugeben, wobei der Einlass (106) eine Vorderfläche senkrecht zur Längsachse des röhrenförmigen Körpers umfasst;
einen Filter (110), der mit dem Verbinderanschluss (102) am Einlass (104) gekoppelt ist, wobei der Filter (110) ein erstes Ende (302) und ein zweites Ende (304) aufweist; wobei der Filter (110) einen Flanschabschnitt (306) am ersten Ende (302) und mehrere Löcher (312) zum zweiten Ende (304) hin aufweist, die eine Filterzone (314) definieren;
**dadurch gekennzeichnet, dass**
der Filter (110) durch den Einlass (104) in die Anschlussöffnung eingeführt werden kann, bis der Flanschabschnitt (306) an der Vorderseite des Einlasses (104) anliegt;
der Verbinderanschluss (102) mindestens eine Aussparung (112) enthält, die in der Vorderseite des Einlasses (104) enthalten ist; und
der Flanschabschnitt mindestens einen Vorsprung (308) aufweist, der zum Eingreifen in die mindestens eine Aussparung (112) geeignet ist.

2. Schlauchverbinder (100) nach Anspruch 1, wobei der Schlauchverbinder (100) ein Wassernippel ist.

3. Schlauchverbinder (100) nach Anspruch 1, wobei der Filter (110) so konfiguriert ist, dass er mit einer Reinigungsnadel (802) am zweiten Ende (304) eingeführt wird.

4. Schlauchverbinder (100) nach Anspruch 1, wobei der Filter (110) so konfiguriert ist, dass er entfernbar mit der mindestens einen Aussparung (112) in Eingriff steht.

5. Schlauchverbinder (100) nach Anspruch 1, wobei der Filter (110) durch menschliches Eingreifen leicht entfernbar ist.

6. Schlauchverbinder (100) nach Anspruch 1, wobei der Filter (110) als eine einzelne Einheit hergestellt ist.

7. Schlauchverbinder (100) nach Anspruch 1, wobei der Filter (110) aus einem Kunststoffmaterial besteht.

8. Schlauchverbinder (100) nach Anspruch 1, wobei der Filter (110) sichtbar von dem Anschlussanschluss (102) unterscheidbar ist.

## Revendications

1. Raccord pour tuyaux souples (**100**) comprenant :
un port de raccord (**102**) formé comme un corps tubulaire, apte à recevoir de l'eau au niveau d'une d'entrée (**104**) et à livrer de l'eau au niveau d'une sortie (106), dans lequel l'entrée (106) comprend une surface avant sensiblement perpendiculaire à l'axe longitudinal du corps tubulaire ; et
un filtre (**110**) couplé à un port de raccord (**102**) au niveau d'une d'entrée (**104**), le filtre (110) ayant une première extrémité **(302)** et une deuxième extrémité (304) ; dans lequel le filtre (**110**) inclut une portion de bride (306) en correspondance de la première extrémité (302) et une pluralité d'orifices (312) vers la deuxième extrémité (304) définissant une zone de filtration (314) ;
**caractérisé en ce que** :
le filtre (**110**) est apte à être inséré à l'intérieur du port de raccord à travers l'entrée (**104**) jusqu'à ce que la portion de bride (306) vienne en butée contre la surface avant de l'entrée (104) ;
le port de raccord (102) inclut au moins un évidement (112) compris dans ladite surface avant de l'entrée (104) ; et
la portion de bride a au moins une saillie (308) apte à mettre en prise l'au moins un évidement (112).

2. Raccord pour tuyaux souples (**100**) de la revendication 1, dans lequel le raccord pour tuyaux souples (**100**) est un mamelon à eau.

3. Raccord pour tuyaux souples (**100**) de la revendication 1, dans lequel le filtre (**110**) est configuré pour être inséré avec une aiguille de nettoyage (**802**) en correspondance de la deuxième extrémité (**304**).

4. Raccord pour tuyaux souples (**100**) de la revendication 1, dans lequel le filtre (**110**) est configuré pour être mis en prise de manière amovible avec l'au moins un évidement (**112**).

5. Raccord pour tuyaux souples (**100**) de la revendication 1, dans lequel le filtre (**110**) est facilement amovible avec une intervention humaine.

6. Raccord pour tuyaux souples (**100**) de la revendication 1, dans lequel le filtre (**110**) est réalisé comme une seule unité.

7. Raccord pour tuyaux souples (**100**) de la revendication 1, dans lequel le filtre (**110**) est réalisé en une matière plastique.

8. Raccord pour tuyaux souples (**100**) de la revendication 1, dans lequel le filtre (**110**) est visiblement reconnaissable par rapport au port de raccord (**102**).
